(19) Europäisches Patentamt
European Patent Office
Office européen des brevets

(11) **EP 4 404 288 A1**

(12) **EUROPEAN PATENT APPLICATION**
published in accordance with Art. 153(4) EPC

(43) Date of publication:
**24.07.2024  Bulletin 2024/30**

(21) Application number: **22941110.3**

(22) Date of filing: **11.05.2022**

(51) International Patent Classification (IPC):
**H01M 4/04** (2006.01)    **H01M 10/058** (2010.01)

(52) Cooperative Patent Classification (CPC):
**H01M 4/04; H01M 10/058**

(86) International application number:
**PCT/CN2022/092255**

(87) International publication number:
**WO 2023/216152 (16.11.2023 Gazette 2023/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
• **FAN, Xiaoyun**
  **Ningde, Fujian 352100 (CN)**
• **WANG, Yuanxin**
  **Ningde, Fujian 352100 (CN)**

• **XIE, Guotao**
  **Ningde, Fujian 352100 (CN)**
• **WANG, Yuan**
  **Ningde, Fujian 352100 (CN)**
• **HAN, Wucun**
  **Ningde, Fujian 352100 (CN)**
• **LIN, Deming**
  **Ningde, Fujian 352100 (CN)**
• **HU, Zhipeng**
  **Ningde, Fujian 352100 (CN)**
• **CHENG, Tao**
  **Ningde, Fujian 352100 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(54) **ELECTRODE SHEET ROLL SEGMENTATION METHOD AND APPARATUS, ELECTRONIC DEVICE AND STORAGE MEDIUM**

(57)    The present application provides an electrode sheet roll segmentation method and apparatus, an electronic device and a storage medium. The method comprises: acquiring the electrode sheet length of an electrode sheet to be segmented; and when it is determined according to the electrode sheet length that there is a roll segmentation parameter that satisfies a preset condition, segmenting said electrode sheet according to the roll segmentation parameter to obtain a segmented electrode sheet. The preset condition comprises: the electrode sheet to be segmented can be segmented according to the roll segmentation parameter, and the length of each electrode sheet roll obtained after segmentation is within a preset range. According to the present application, the roll segmentation parameter is determined according to the length of the electrode sheet to be segmented, and the electrode sheet to be segmented is segmented according to the roll segmentation parameter, so that the probability of presence of an electrode sheet roll having an inappropriate length at the end of segmentation is lowered, thereby reducing the waste of the electrode sheet.

FIG. 1

## Description

## TECHNICAL FIELD

This application relates to the field of battery manufacturing technologies, and specifically, to an electrode plate slitting method and apparatus, an electronic device, and a storage medium.

## BACKGROUND

The current battery manufacturing process for vehicle includes a slitting process, where the slitting process refers to cutting a large roll of electrode plate output from a previous process into a plurality of small rolls of electrode plate based on the battery model being manufactured.

The existing slitting method involves unwinding a large roll of electrode plate from an unwinding shaft while simultaneously winding the electrode plate onto a winding shaft. When the length of the wound electrode plate reaches a preset threshold winding diameter of the machine, cutting is performed one time to obtain a small roll of electrode plate. Due to process reasons, the length of the large roll of electrode plate output from the previous process is not fixed each time. Consequently, when the large roll of electrode plate is cut based on the threshold winding diameter, a small roll of electrode plate with an inappropriate length may appear, leading to waste in the electrode plate.

## SUMMARY

The purpose of embodiments of this application is to provide an electrode plate slitting method and apparatus, an electronic device, and a storage medium to solve the problem of the occurrence of a small roll of electrode plate with an inappropriate length in the process of electrode plate slitting.

According to a first aspect, an embodiment of this application provides an electrode plate slitting method, where the method includes: obtaining a length of an electrode plate to be cut; and when it is determined that a slitting parameter meeting a preset condition exists based on the length of the electrode plate, cutting the electrode plate to be cut based on the slitting parameter to obtain the electrode plate after cutting. It can be understood that the preset condition includes: the slitting parameter is able to be used for cutting the electrode plate to be cut and a length of each electrode plate roll obtained after cutting is within a preset range.

In this embodiment of this application, the slitting parameter is determined based on the length of the electrode plate to be cut and the electrode plate to be cut is cut based on the slitting parameter. This decreases the probability of the occurrence of an electrode plate roll with an inappropriate length at the end of the cutting, improving the utilization rate of the electrode plate.

In any embodiment, determining that a slitting parameter meeting the preset condition exists includes: starting with an initial value of the slitting parameter, determining whether the slitting parameter meets the preset condition; and if not, updating the slitting parameter until the obtained slitting parameter meets the preset condition, and determining that a slitting parameter meeting the preset condition exists.

In this embodiment of this application, whether a slitting parameter meeting the preset condition exists is determined by adjusting the slitting parameter, and when a slitting parameter meeting the preset condition exists, the electrode plate to be cut is cut based on the slitting parameter, preventing the occurrence of an electrode plate with an inappropriate length at the end.

In any embodiment, determining that a slitting parameter meeting the preset condition exists includes: starting with an initial value of the slitting parameter, determining whether the slitting parameter meets the preset condition; and if not, and a length of an electrode plate after cutting calculated based on the current slitting parameter is greater than a lower limit of the preset range, progressively increasing the slitting parameter until the obtained slitting parameter meets the preset condition, and determining that a slitting parameter meeting the preset condition exists.

In this embodiment of this application, if the current slitting parameter does not meet the preset condition and it is first determined that if the electrode plate to be cut is cut based on the current slitting parameter, the length of the obtained electrode plate after cutting is greater than the lower limit of the preset range. This indicates that the value of the slitting parameter can be increased; otherwise, it can be concluded that a slitting parameter meeting the preset condition does not exist, thus reducing the calculation amount.

In any embodiment, cutting the electrode plate to be cut based on the slitting parameter includes: if a plurality of slitting parameters meeting the preset condition exist, cutting the electrode plate to be cut based on a slitting parameter with a smallest value. In this embodiment of this application, the electrode plate to be cut is cut based on the slitting parameter meeting the preset condition and with the smallest value, reducing the cutting times.

In any embodiment, cutting the electrode plate to be cut based on the slitting parameter includes: if a plurality of slitting parameters meeting the preset condition exist, obtaining the number of cells of the electrode plate after cutting corresponding to each slitting parameter, where the number of cells is used for representing the number of cells that are able to be wound by using the electrode plate after cutting; and cutting the electrode plate to be cut based on a slitting parameter corresponding to the number of cells with a smallest decimal part value.

In this embodiment of this application, the electrode plate to be cut is cut based on the slitting parameter meeting the preset condition and corresponding to the number of cells with the smallest decimal part value, improving the utilization rate of the electrode plate.

In any embodiment, a difference in lengths of the electrode plate rolls obtained by cutting the electrode plate to be cut based on the slitting parameter is less than a preset threshold so that the electrode plate to be cut is cut as evenly as possible.

In any embodiment, cutting the electrode plate to be cut based on the slitting parameter includes: monitoring an actual winding length; correcting the actual winding length by using a compensation parameter to obtain a corrected actual winding length; and if the corrected actual winding length is equal to the length of the electrode plate roll, performing a cut.

In this embodiment of this application, the actual winding length is corrected by using the compensation parameter, so that the accuracy of the cutting is improved.

In any embodiment, the method further includes: obtaining a constant plate moving speed and a recorded constant speed winding length during a slitting process; and determining the compensation parameter based on the constant plate moving speed and the constant speed winding length.

In this embodiment of this application, the compensation parameter is first determined and then the actual winding length is corrected by using the compensation parameter, so that the accuracy of the cutting is improved.

In any embodiment, if a slitting parameter meeting the preset condition does not exist, the electrode plate to be cut is cut based on an upper limit of the preset range.

In this embodiment of this application, if a slitting parameter meeting the preset condition does not exist, the electrode plate to be cut is cut based on the upper limit of the preset range, ensuring the normal execution of the slitting process.

According to a second aspect, an embodiment of this application provides an electrode plate slitting apparatus, including: an obtaining module, configured to obtain a length of an electrode plate to be cut; and a cutting module, configured to, when a slitting parameter meeting a preset condition exists, cut the electrode plate to be cut based on the slitting parameter; where the preset condition includes: the slitting parameter is able to be used for cutting the electrode plate to be cut and a length of each electrode plate roll obtained after cutting is within a preset range.

According to a third aspect, an embodiment of this application provides an electronic device, including a processor, a memory, and a bus, where the processor and the memory communicate with each other through the bus; and the memory stores program instructions executable by the processor, and when invoking the program instructions, the processor is able to perform the method according to the first aspect.

According to a fourth aspect, an embodiment of this application provides a non-transient computer-readable storage medium, where the non-transient computer-readable storage medium stores computer instructions, and the computer instructions cause the computer to perform the method according to the first aspect.

Other features and advantages of this application will be described in the subsequent specification, and in part will be apparent in the specification, or will be understood by implementing embodiments of this application. The objectives and other advantages of this application can be implemented and obtained through the structures particularly pointed out in the written description, claims, and drawings.

## BRIEF DESCRIPTION OF DRAWINGS

In order to describe the technical solutions in the embodiments of this application more clearly, the following briefly describes the accompanying drawings required for describing the embodiments of this application. It is appreciated that the accompanying drawings below only show some embodiments of this application and thus should not be considered as limitations on the scope. Persons of ordinary skill in the art may still derive other related drawings from the accompanying drawings without creative effort.

FIG. 1 is a schematic flowchart of an electrode plate slitting method according to an embodiment of this application;

FIG. 2 is a schematic flowchart of a method for determining whether a slitting parameter meeting a preset condition exists according to an embodiment of this application;

FIG. 3 is a schematic flowchart of another method for determining whether a slitting parameter meeting a preset condition exists according to an embodiment of this application;

FIG. 4 is a schematic flowchart of another electrode plate slitting method according to an embodiment of this application;

FIG. 5 is a schematic diagram of a configuration screen of an electronic device according to an embodiment of this application;

FIG. 6 is a schematic structural diagram of an electrode plate slitting apparatus according to an embodiment of this application; and

FIG. 7 is a schematic diagram of a physical structure of an electronic device according to an embodiment of this application.

## DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

In the current cold pressing machine, a large roll of electrode plate, after undergoing rolling and a slitting knife, can be cut into multiple batches of small rolls of electrode plate. During the production process, the large roll of electrode plate is unwound, and the unwound electrode plate is wound onto a winding shaft. When the length of the wound small roll of electrode plate reaches a threshold length preset on the machine, the slitting knife is used to cut the large roll of electrode plate one time and the unwinding and winding operations are stopped. Then, an operator removes the small roll of electrode plate from the winding shaft. At this point, one cutting is completed. If the large roll of electrode plate is not completely cut, the unwinding and winding operations will continue.

Due to process reasons, the length of the large roll of electrode plate output from the previous process is not fixed. Assuming that the length of the large roll of electrode plate is 100 meters and the threshold length is 50 meters, the large roll of electrode plate can be exactly divided into two batches of small rolls of electrode plate. Assuming that the length of the large roll of electrode plate is 130 meters, there will be 30 meters left. If the actual process specifies a length range of [40 meters, 60 meters] for a small roll of electrode plate, the remaining 30 meters of electrode plate is too short to be used as a separate small roll of electrode plate. At present, there are two main approaches: first, the 30 meters of electrode plate is thrown away, which will lead to the waste in the electrode plate; and second, the operator connects the 30 meters of electrode plate with the next batch of large roll of electrode plate using an adhesive tape, and continues the slitting process. In the obtained small roll of electrode plate, there is a roll combination joint, where the roll combination joint needs to be cut off in a subsequent process, resulting in the disposal of electrode plate of a length equivalent to a length required by a cell. Therefore, this method also leads to waste in the electrode plate. Additionally, manually bonding the electrode plates incurs significant labor costs and reduces production efficiency.

To prevent the occurrence of a small roll of electrode plate with an inappropriate length during the slitting process, the inventors have found through research that since it is required in the process that the lengths of the small rolls of electrode plate obtained after cutting are within a length range, the threshold length can be dynamically adjusted based on the length of the large roll of electrode plate output from the previous process, as long as the threshold length is ensured to be within the length range. In this way, a length requirement on the small rolls of electrode plate satisfying the process requirements can be obtained, and the large roll of electrode plate can be cut.

Based on the considerations above, to address the issue of the occurrence of a small roll of electrode plate with an inappropriate length during the slitting process, after in-depth research, the inventors have proposed an electrode plate slitting method. To be specific, a slitting parameter meeting a preset condition is determined based on a length of the electrode plate to be cut and the electrode plate to be cut is cut based on the slitting parameter.

The electrode plate slitting method disclosed in embodiments of this application can be applied in scenarios where electrode plates need to be cut.

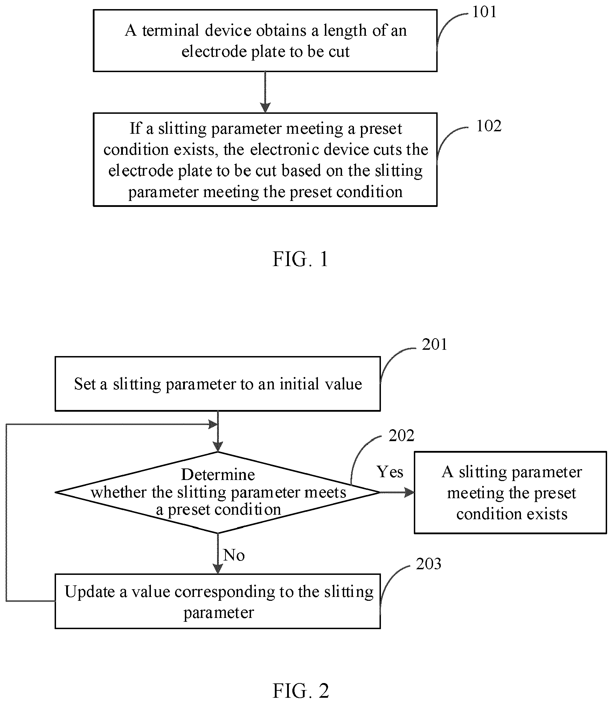

FIG. 1 is a schematic flowchart of an electrode plate slitting method according to an embodiment of this application. As shown in FIG. 1, the method is applied to an electronic device, where the electronic device may be a cold pressing machine or other devices capable of slitting the electrode plates, which is not specifically limited in this embodiment of this application. The method includes the following steps:

    Step 101: Obtain a length of an electrode plate to be cut.
    Step 102: If a slitting parameter meeting a preset condition exists, the electronic device cuts the electrode plate to be cut based on the slitting parameter meeting the preset condition.

In step 101, the electrode plate to be cut may be a large roll of electrode plate output from a previous production process, or may be a large roll of electrode plate obtained in other manners. The length of the electrode plate may be measured in "meter" or by using an EA value, where the EA value of a large roll of electrode plate in a length direction refers to the number of cells that can be produced by using the large roll of electrode plate in the length direction.

In step 102, the preset condition includes that the slitting parameter is able to be used for cutting the electrode plate to be cut and a length of each electrode plate roll obtained after cutting is within a preset range. It can be understood that the preset range is set in advance based on the process requirements, which is a length range, including an upper limit and a lower limit. For example, if the preset range is [45 meters, 50 meters], the upper limit is 50 meters and the lower limit is 45 meters. The length of each electrode plate roll obtained after cutting should be within the preset range.

The slitting parameter refers to the parameter based on which the electrode plate to be cut is cut. The slitting parameter may be a cutting batch or a roll batch. The cutting batch is used to represent the number of cuttings that are performed on the electrode plate to be cut, and the roll batch is used to represent the number of batches of electrode plate rolls obtained after the electrode plate to be cut is cut. For example, if the roll batch is 1, one batch of electrode plate roll(s) needs to be obtained after the electrode plate to be cut is cut, that is, the electrode plate to be cut is not cut in the length direction; and if the roll batch is 2, the electrode plate to be cut needs to be cut one time to obtain two batches of electrode plate rolls. It can be understood that one batch of electrode plate roll(s) may include one electrode plate roll or a plurality of electrode plate rolls, and the specific number of electrode plate rolls contained in one batch of electrode plate roll(s) is determined based on configuration parameters of the process. The case that a plurality of electrode plate rolls are included is the result of cutting the electrode plate to be cut in the width direction. The length direction refers to an axial direction of the roll formed by the electrode plate to be cut, and the width direction refers to a radial direction of the roll.

In this embodiment of this application, the slitting parameter is determined based on the length of the electrode plate to be cut and the electrode plate to be cut is cut based on the slitting parameter. This prevents the occurrence of an electrode plate roll with an inappropriate length at the end of the cutting, improving the utilization rate of the electrode plate.

On the basis of the foregoing embodiment, after the length of the electrode plate to be cut is obtained, it can be determined in advance whether a slitting parameter meeting the preset condition exists. The determining method is shown in FIG. 2, and the method includes:

    Step 201: Set the slitting parameter to an initial value.
    Step 202: Determine whether the slitting parameter can be used for cutting the electrode plate to be cut and the length of each electrode plate roll after cutting is within the preset range; if not, perform step 203; and if yes, it indicates that a slitting parameter meeting the preset condition exists.
    Step 203: For a situation that the current slitting parameter does not meet the preset condition, update a value corresponding to the slitting parameter and continue to perform step 202.

It should be noted that the foregoing steps 201 to 203 may be performed by an electronic device.

In step 201, the initial value may be preset on the electronic device manually, for example, it may be set to 1, or it may be set to 0, 2, or 3..., and the initial value may be preset according to the actual situation.

In step 202, if the electronic device determines that the slitting parameter meets the preset condition, it can be determined that a slitting parameter meeting the preset condition exists.

In step 203, taking the slitting parameter being the roll batch as an example, if the current roll batch does not meet the preset condition, the value corresponding to the roll batch can be updated. For example, the value corresponding to the roll batch can be increased based on the current roll batch, or the value corresponding to the roll batch can be decreased based on the current roll batch. In the case of increasing the value corresponding to the roll batch, the roll batch can be increased by 1 each time; or certainly, the roll batch can be increased by 2, 3, or the like each time according to the actual situation, which is not specifically limited in this embodiment of this application. If the roll batch is increased to a maximum value of the roll batch and still does not meet the preset condition, increasing of the roll batch value is stopped and it is concluded that a roll batch meeting the preset condition does not exist. Alternatively, after the newly increased roll batch value is obtained, if it is calculated that the length of the electrode plate roll obtained after cutting the electrode plate to be cut using the increased roll batch value is less than the lower limit of the preset range, increasing of the roll batch value is stopped and it is concluded that a roll batch meeting the preset condition does not exist. It should also be noted that if the current roll batch meets the preset condition, step 203 can continue to be performed until the preset maximum value of the roll batch is reached. It can be understood that the maximum value of the roll batch can also be preset, and in this embodiment of this application, the maximum value of the roll batch is greater than the initial value.

In the case of decreasing the value corresponding to the roll batch, the roll batch can be decreased by 1 each time; or certainly, the roll batch can be decreased by 2, 3, or the like each time according to the actual situation, which is not specifically limited in this embodiment of this application. If the roll batch is decreased to a maximum value of the roll batch and still does not meet the preset condition, decreasing of the roll batch value is stopped and it is concluded that a roll batch meeting the preset condition does not exist. It can be understood that for the method of decreasing the roll batch, its initial value should be greater than the smallest value of the roll batch, where the smallest value of the roll batch may be 1 or 2, or certainly, it can be other values, which is not specifically limited in this embodiment of this application.

In this embodiment of this application, whether a slitting parameter meeting the preset condition exists is determined by adjusting the slitting parameter, and when a slitting parameter meeting the preset condition exists, the electrode plate to be cut is cut based on the slitting parameter, preventing the occurrence of an electrode plate with an inappropriate length at the end.

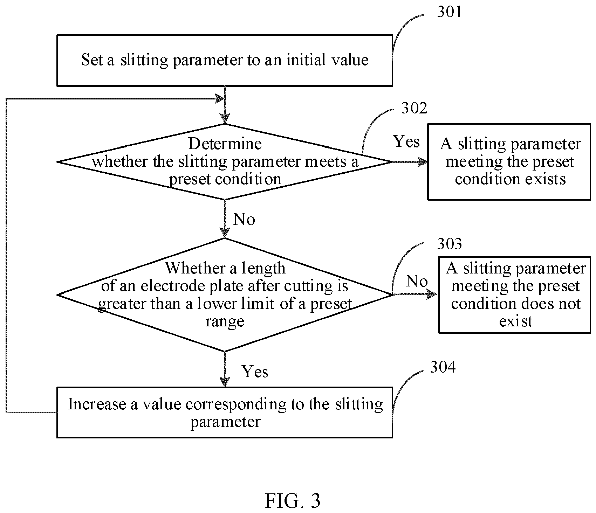

In another embodiment, FIG. 3 is a schematic flowchart of another method for determining whether a slitting parameter meeting a preset condition exists according to an embodiment of this application, as shown in FIG. 3, the method includes:

Step 301: Set the slitting parameter to an initial value.

Step 302: Determine whether the slitting parameter can be used for cutting the electrode plate to be cut and the length of each electrode plate roll after cutting is within the preset range; if not, perform step 203; if yes, it indicates that a slitting parameter meeting the preset condition exists.

Step 303: The electronic device determines whether a length of an electrode plate after cutting calculated based on the current slitting parameter is greater than a lower limit of the preset range, if so, step 304 is performed; otherwise, it indicates that a slitting parameter meeting the preset condition does not exist.

Step 304: If the length of the electrode plate after cutting corresponding to the current slitting parameter is greater than the lower limit of the preset range, increase the value corresponding to the slitting parameter and continue to perform step 302.

It should be noted that the foregoing steps 301 to 304 may be performed by an electronic device.

In step 301, the initial value may be preset on the electronic device manually, for example, it may be set to 1, or it may be set to 0, 2, or 3..., and the initial value may be preset according to the actual situation, which is not specifically limited in this embodiment of this application.

In step 302, if it is determined that the slitting parameter meets the preset condition, it can be determined that a slitting parameter meeting the preset condition exists. In addition, steps 303 and 304 can continue to be performed until the preset maximum value of the slitting parameter is reached. It can be understood that the maximum value of the slitting parameter may also be preset, and in this embodiment of this application, the maximum value of the slitting parameter is greater than the initial value.

In step 304, when the value corresponding to the slitting parameter is being increased, the slitting parameter can be increased by 1 each time; or certainly, the slitting parameter can be increased by 2, 3, or the like each time according to the actual situation, which is not specifically limited in this embodiment of this application. If the slitting parameter is increased to a maximum value of the slitting parameter and still does not meet the preset condition, increasing of the value of the slitting parameter is stopped and it is concluded that a slitting parameter meeting the preset condition does not exist.

In this embodiment of this application, if the current slitting parameter does not meet the preset condition and it is first determined that if the electrode plate to be cut is cut based on the current slitting parameter, the length of the obtained electrode plate after cutting is greater than the lower limit of the preset range, this indicates that the value of the slitting parameter can be increased; otherwise, it can be concluded that a slitting parameter meeting the preset condition does not exist, thus reducing the calculation amount.

On the basis of the foregoing embodiment, there may be one or a plurality of slitting parameters meeting the preset condition. When a plurality of slitting parameters meeting the preset condition exist, the electronic device selects the slitting parameter with a smallest value from the plurality of slitting parameters meeting the preset condition when cutting the electrode plate to be cut, and cuts the electrode plate to be cut based on the slitting parameter with the smallest value.

In the specific implementation process, currently, after the electrode plate to be cut is cut to obtain the electrode plate rolls, since the portions at both the head and tail of the electrode plate rolls are coated with adhesive and the adhesive-coated electrode plate cannot be used, the coated portions will be cut off in the next process. A smaller value of the slitting parameter corresponds to a longer length for each electrode plate roll, and therefore a smaller number of electrode plate rolls are obtained. If the length of the electrode plate cut off from each electrode plate roll is equal, then a smaller number of electrode plate rolls results in a smaller total length of the cut-off electrode plate. Based on the foregoing considerations, when a plurality of slitting parameters meeting the preset condition exist, the electronic device may cut the electrode plate to be cut based on the slitting parameter with the smallest value.

In this embodiment of this application, the electrode plate to be cut is cut based on the slitting parameter meeting the preset condition and with the smallest value, reducing the cutting times.

In another embodiment, there may be one or a plurality of slitting parameters meeting the preset condition. For the case when a plurality of slitting parameters meeting the preset condition exist, the electronic device obtains the number of cells of the electrode plate after cutting corresponding to each slitting parameter, and cuts the electrode plate to be cut based on a slitting parameter corresponding to the number of cells with a smallest decimal part value.

In a specific implementation process, after the electronic device cuts the electrode plate to be cut, in a case that the portions at both the head and tail of the electrode plate rolls do not need to be cut off in a following process, if the number of cells that can be formed by winding the cut electrode plate obtained after the electrode plate to be cut is cut based on the slitting parameter is not an integer, for example, the number of the cells is 30.5EA, it means that the electrode plate roll can be used to wind 30 complete cells, and the length of the remaining electrode plate can be used to wind 0.5 cells. The remaining length of electrode plate corresponding to 0.5 cells cannot be used and needs to be thrown away, which leads to the waste in the electrode plate. Therefore, to reduce the waste in the electrode plate, after a plurality of slitting parameters meeting the preset condition are obtained, the slitting parameter corresponding to the number of cells with the smallest decimal part value is selected and the slitting parameter is used for cutting the electrode plate to be cut. For example, if the slitting parameters meeting the preset condition correspond to numbers of cells of 30.1EA, 45.6EA, and 54.8EA, it can be seen that 30.1EA corresponds to the smallest decimal part value, which is 0.1. Therefore, the slitting parameter corresponding to 30.1EA is used for cutting the electrode plate to be cut. For another example, if the slitting parameters meeting the preset condition correspond to numbers of cells of 20.0EA and 36.5EA respectively, the electrode plate to be cut can be cut based on the slitting parameter corresponding to 20.0EA.

In this embodiment of this application, the electrode plate to be cut is cut based on the slitting parameter meeting the preset condition and corresponding to the number of cells with the smallest decimal part value, reducing waste of electrode plate in the electrode plate rolls and improving the utilization rate of the electrode plate.

On the basis of the foregoing embodiment, a difference in lengths of the electrode plate rolls obtained after the electronic device cuts the electrode plate to be cut based on the slitting parameter is less than a preset threshold.

Electrode plate rolls refer to small rolls of electrode plate formed by the cut electrode plate obtained after the electrode plate to be cut is cut. The preset threshold is preset, for example, it may be 1 meter or 0.5EA, and the specific value of the preset threshold is not limited in this embodiment of this application.

To ensure that the electrode plate to be cut is cut evenly, when the slitting parameter is being determined, the slitting parameter, if based on which the electrode plate to be cut is cut, a length difference in the obtained electrode plate rolls will be less than the preset threshold, is selected.

In this embodiment, the length difference in the electrode plate rolls is limited to be less than the preset threshold, so that the electrode plate to be cut can be cut as evenly as possible.

On the basis of the foregoing embodiment, in the slitting process, the electrode plate to be cut after cold pressing can be wound by using the winding shaft and the electronic device monitors the actual winding length and corrects the actual winding length by using a compensation parameter to obtain the corrected actual winding length. When detecting that the corrected actual winding length is equal to the length of the electrode plate rolls calculated based on the slitting parameter, the electronic device performs a cut.

In the specific implementation process, the electronic device can monitor the actual winding length of the electrode plate to be cut wound by the winding shaft in real time. The monitoring method may include: recording the number of revolutions of another reel using an encoder on the reel and calculating the actual winding length based on the number of revolutions and a radius of the another reel. It can be understood that in addition to the winding shaft, the electronic device also includes another reel to assist in the winding of the winding shaft. The actual winding length may also be calculated by using the rotational speed and the winding time of the winding shaft, and the specific method for monitoring the actual winding length is not limited in this embodiment of this application.

During the process of winding the electrode plate to be cut by the winding shaft, due to the possibility of slippage between the electrode plate to be cut and the winding shaft, the monitored actual winding length may be inaccurate. To improve the accuracy of obtaining the electrode plate rolls, in this embodiment of this application, the actual winding length is corrected by using the compensation parameter to obtain the corrected actual winding length. The electronic device determines whether the corrected actual winding length is equal to the length of the electrode plate rolls, if yes, it performs a cut.

In this embodiment of this application, the actual winding length is corrected by using the compensation parameter, so that the accuracy of the cutting is improved.

On the basis of the foregoing embodiment, in this embodiment of this application, the compensation parameter is obtained by calculation in the following method: the electronic device obtains a constant plate moving speed and records a constant speed winding length during a slitting process and then determines the compensation parameter based on the constant plate moving speed and the constant speed winding length.

In the specific implementation process, the constant plate moving speed refers to the unwinding speed of the electrode plate to be cut wound on the unwinding shaft in a constant speed unwinding state during the unwinding process. The unit of the constant plate moving speed may be meter/minute and certainly, it may also be meter/second, which is not specifically limited in this embodiment of this application. When winding the electrode plate to be cut, the electronic device records its winding length. Constant speed winding length refers to the length of the electrode plate to be cut wound by the winding shaft during unwinding at a constant plate moving speed by the unwinding shaft.

After the constant plate moving speed and the constant speed winding length are obtained, the theoretical winding length is obtained based on the constant plate moving speed and the duration. The ratio of the theoretical winding length to the constant speed winding length is used as the compensation parameter.

After the compensation parameter is obtained, the product of the actual winding length and the compensation parameter is used as the corrected actual winding length.

For example, if the constant plate moving speed is 80m/min and the theoretical winding length after 3min of winding at this constant plate moving speed is 240m, while the actual winding length recorded by the electronic device is 230m, the compensation parameter is 240/230. In the actual slitting process, the electronic device can periodically correct the recorded actual winding length. If the actual winding length is 460 m, then the corrected

$$460 \times \frac{240}{230} = 480m$$

actual winding length is:                .

In this embodiment of this application, the compensation parameter is first determined and then the actual winding length is corrected by using the compensation parameter, so that the accuracy of the cutting is improved.

On the basis of the foregoing embodiment, after the length of the electrode plate to be cut is obtained, it can be determined in advance whether a slitting parameter meeting the preset condition exists. For the determining method, refer to the foregoing embodiment and it is not described herein again. For the case that a slitting parameter meeting the preset condition does not exist, to ensure the normal execution of the slitting process, any value in the preset range can be used as the length of the electrode plate rolls obtained after cutting the electrode plate to be cut.

In another embodiment, the electrode plate to be cut can be cut based on the upper limit of the preset range.

In the specific implementation process, currently, after the electrode plate to be cut is cut to obtain the electrode plate rolls, since the portions at both the head and tail of the electrode plate rolls are coated with adhesive and the adhesive-coated electrode plate cannot be used, the coated portions will be cut off in the next process. A smaller value of the slitting parameter corresponds to a longer length for each electrode plate roll, and therefore a smaller number of electrode plate rolls are obtained. If the length of the electrode plate cut off from each electrode plate roll is equal, then a smaller number of electrode plate rolls results in a smaller total length of the cut-off electrode plate. Based on the foregoing considerations, when a plurality of slitting parameters meeting the preset condition exist, the upper limit of the preset range can be used as the length of the electrode plate rolls to cut the electrode plate to be cut so that a smaller number of electrode plate rolls can be obtained.

In this embodiment of this application, if a slitting parameter meeting the preset condition does not exist, the electrode plate to be cut is cut based on the upper limit of the preset range. This ensures the normal execution of the slitting process while reducing waste in the electrode plate.

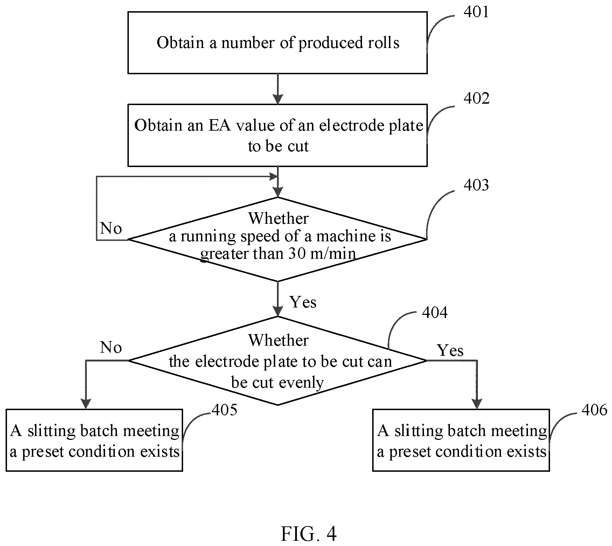

FIG. 4 is a schematic flowchart of another electrode plate slitting method according to an embodiment of this application. As shown in FIG. 4, this method can also be applied to the electronic device, and when taking the slitting parameter being the roll batch as an example, it includes:

Step 401: Obtain the number of produced rolls. Different cell models correspond to different electrode plate widths. For a fixed-width electrode plate to be cut, when electrode plates for different cell models are being produced, the number of produced rolls can be pre-selected on the electronic device or it may be a default value for the number of produced rolls on the electronic device. The "number of produced rolls" refers to the number of electrode plate rolls that can be obtained by performing one cutting in the radial direction of the large roll of electrode plate formed by the electrode plate to be cut. Therefore, a slitting knife is provided in the axial direction of the large roll of electrode plate, where the slitting knife can be used to cut the electrode plate to a plurality of sections in the width direction of the electrode plate. For example, if "1 out of 3" is selected on the electronic device, the electrode plate to be cut can be cut into 3 sections in the width direction of the electrode plate.

Step 402: Obtain the EA value of the electrode plate to be cut. It can be understood that the EA value of the electrode plate to be cut may be obtained from the previous process.

Step 403: Check whether a running speed of the machine is greater than 30 m/min. The operating status of the machine can be determined based on the running speed of the machine. If the running speed of the machine is greater than 30 m/min, it indicates that the machine is in normal operation, perform step 404; otherwise, it indicates that the machine is not running normally, a manual roll change may be in progress, or a malfunction may have caused a machine shutdown. In this case, continue the monitoring of the running speed. It can be understood that the machine refers to a machine used for slitting, that is, the electronic device. The machine may also be a machine that is in communication connection with the electronic device and configured to perform cutting operations on the electrode plate to be cut. The electronic device is configured to determine the roll batch and control the machine to perform cutting after determining that the winding length meets the requirement.

Step 404: Determine whether the electrode plate to be cut can be cut evenly. The electrode plate can determine whether the electrode plate to be cut can be cut evenly into 1 batch, 2 batches, 3 batches, and 4 batches and determine whether the length of each small roll is within the preset range after the electrode plate to be cut is cut.

For example, for ease of description, the roll formed by the electrode plate to be cut is referred to as a large roll, and an electrode plate roll obtained after cutting the electrode plate to be cut is called a small roll. Take a large roll of coated material for MEB with a total EA value of 3015EA as an example (where the EA value of the large roll in the length direction is 1005EA and the EA value in the width direction is 3EA), at this time, the upper limit of EA value of the small roll is set to 550EA and the lower limit is set to 360EA.

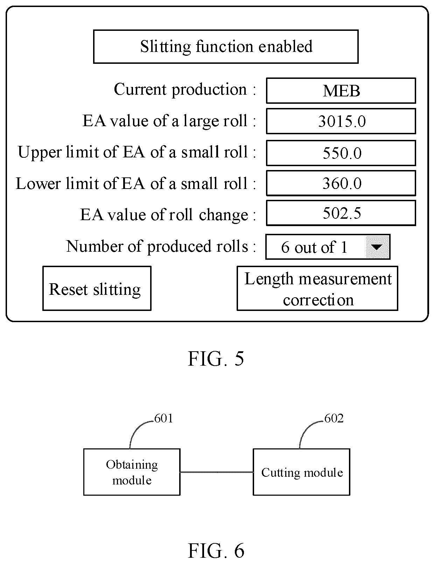

A form of 3 out of 1 is adopted in the cold pressing process for an MEB cell, that is, the number of small rolls is 3 for every one batch produced, as shown in FIG. 5. First, determine whether the large roll can be evenly cut if one batch is produced, that is, whether the large roll can be evenly cut into 3 small rolls. It is calculated that: 3015EA ÷ 3 = 1005EA.

Since 1005EA is not within the set upper limit (550EA) and lower limit (360EA) for the EA value of the small roll, the cutting of the large roll cannot be completed in one batch, that is, the large roll is not suitable for even division into 3 small rolls.

Next, determine whether the large roll can be evenly cut if two batches are produced, that is, determine whether the large roll can be evenly cut into 6 small rolls. 3015EA ÷ 6 = 502.5EA.

502.5EA falls exactly between the set upper limit (550EA) and lower limit (360EA) for the EA value of the small roll. Therefore, the cutting of the large roll can be completed in two batches, that is, the large roll can be evenly cut into 6 small rolls.

At this point, the program calculation is over, and the large roll of 3015EA is divided into two batches, one batch with 3 small rolls, totaling 6 small rolls, each of which is 502.5EA long.

If the large roll can be evenly divided, perform step 406; otherwise, perform step 405.

Step 405: Perform the cutting based on the upper limit of the preset range.

Step 406: Cut the electrode plate to be cut based on the length obtained by calculation. If the electrode plate to be cut can be evenly divided, obtain the length of each electrode plate roll after cutting based on the length of the electrode plate to be cut and the roll batch meeting the preset condition, and then cut the electrode plate to be cut based on the length. That is, the cold pressing machine gives an alarm and stops when the recorded winding length of the machine reaches the meters corresponding to 502.5EA.

It can be understood that before each cutting in step 405 and step 406, an alarm can be reported to stop the machine, that is, unwinding and winding are stopped, and after cutting with a cutting blade, the electrode plate rolls are removed. If there is remaining electrode plate to be cut, that is, the cutting of the electrode plate to be cut is not completed, continue to perform step 405 or step 406 until the cutting of the entire electrode plate to be cut is completed. Through the foregoing process, waste in the electrode plate can be reduced.

FIG. 6 is a schematic structural diagram of an electrode plate slitting apparatus according to an embodiment of this application, where the apparatus may be a module, program segment, or code on an electronic device. It should be understood that the apparatus corresponds to the method embodiment shown in FIG. 1, capable of performing various steps involved in the method embodiment in FIG 1. For the specific functions of the apparatus, refer to the description above. To avoid repetition, detailed descriptions are appropriately omitted herein. The apparatus includes: an obtaining module 601 and a cutting module 602, where:

the obtaining module 601 is configured to obtain a length of an electrode plate to be cut; and the cutting module 602 is configured to, when a slitting parameter meeting a preset condition exists, cut the electrode plate to be cut based on the slitting parameter; where the preset condition includes: the slitting parameter is able to be used for cutting the electrode plate to be cut and a length of each electrode plate roll obtained after cutting is within a preset range.

On the basis of the foregoing embodiment, determining that a slitting parameter meeting the preset condition exists includes:

starting with an initial value of the slitting parameter, determining whether the slitting parameter meets the preset condition; and if not, progressively increasing the slitting parameter until the obtained slitting parameter meets the preset condition, and determining that a slitting parameter meeting the preset condition exists.

On the basis of the foregoing embodiment, determining that a slitting parameter meeting the preset condition exists includes:

starting with an initial value of the slitting parameter, determining whether the slitting parameter meets the preset condition; and if not, and a length of an electrode plate after cutting calculated based on the current slitting parameter is greater than a lower limit of the preset range, progressively increasing the slitting parameter until the obtained slitting parameter meets the preset condition, and determining that a slitting parameter meeting the preset condition exists.

On the basis of the foregoing embodiment, the cutting module 602 is specifically configured to: if a plurality of slitting parameters meeting the condition exist, cut the electrode plate based on a slitting parameter with a smallest value.

On the basis of the foregoing embodiment, the cutting module 602 is specifically configured to:

if a plurality of slitting parameters meeting the preset condition exist, obtain the number of cells of the electrode plate after cutting corresponding to each slitting parameter, where the number of cells is used for representing the number of cells that are able to be wound by using the electrode plate after cutting; and cut the electrode plate to be cut based on a slitting parameter corresponding to the number of cells with a smallest decimal part value.

On the basis of the foregoing embodiment, the cutting module 602 is specifically configured to: cut the electrode plate to be cut based on the slitting parameter and a difference in lengths of the electrode plate rolls obtained after cutting is less than a preset threshold.

On the basis of the foregoing embodiment, the cutting module 602 is specifically configured to: monitor an actual winding length; correct the actual winding length by using a compensation parameter to obtain a corrected actual winding length; and if the corrected actual winding length is equal to the length of the electrode plate roll, perform a cut.

On the basis of the foregoing embodiment, the apparatus further includes:

a parameter determining module, configured to obtain a constant plate moving speed and a recorded constant speed winding length during a slitting process; and determine the compensation parameter based on the constant plate moving speed and the constant speed winding length.

On the basis of the foregoing embodiment, the cutting module 602 is further configured to: if a slitting parameter meeting the preset condition does not exist, the electrode plate to be cut is cut based on an upper limit of the preset range.

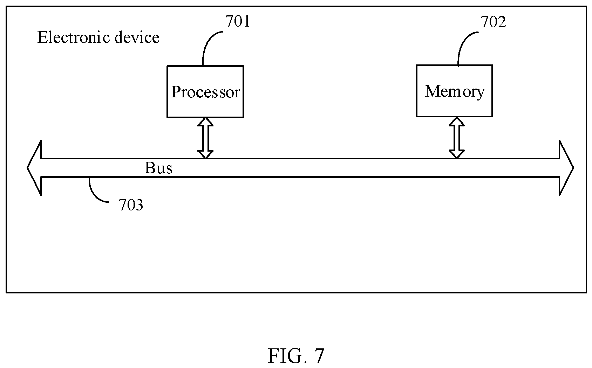

FIG. 7 is a schematic diagram of a physical structure of an electronic device according to an embodiment of this application. As shown in FIG. 7, the electronic device includes a processor (processor) 701, a memory (memory) 702, and a bus 703; where

the processor 701 and the memory 702 communicate with each other through the bus 703; and the processor 701 is configured to invoke the program instructions in the memory 702 to perform the method provided in the foregoing method embodiments, including, for example: obtaining a length of an electrode plate to be cut; and when a slitting parameter meeting a preset condition exists, cutting the electrode plate to be cut based on the slitting parameter; where the preset condition includes: the slitting parameter is able to be used for cutting the electrode plate to be cut and a length of each electrode plate roll obtained after cutting is within a preset range.

The processor 701 may be an integrated circuit chip with a signal processing capability. The processor 701 may be a general-purpose processor, including a central processing unit (Central Processing Unit, CPU), a network processor (Network Processor, NP), and the like; or a digital signal processor (DSP), an application specific integrated circuit (ASIC), a field-programmable gate array (FPGA) or another programmable logic device, a discrete gate or transistor logic device, or a discrete hardware assembly. The methods, steps, and logical block diagrams disclosed in the embodiments of this application can be implemented or performed by the processor. The general-purpose processor may be a microprocessor, or the processor may also be any conventional processor or the like.

The memory 702 may include, but is not limited to, a random access memory (Random Access Memory, RAM), a read only memory (Read Only Memory, ROM), a programmable read-only memory (Programmable Read-Only Memory, PROM), an erasable programmable read-only memory (Erasable Programmable Read-Only Memory, EEPROM), an electric erasable programmable read-only memory (Electric Erasable Programmable Read-Only Memory, EEPROM), and the like.

This embodiment discloses a computer program product. The computer program product includes a computer program stored in a non-transient computer-readable storage medium, and the computer program includes program instructions. When the program instructions are executed by a computer, the computer can perform the method provided in the foregoing method embodiments. The method includes for example: obtaining a length of an electrode plate to be cut; and when a slitting parameter meeting a preset condition exists, cutting the electrode plate to be cut based on the slitting parameter; where the preset condition includes: the slitting parameter is able to be used for cutting the electrode plate to be cut and a length of each electrode plate roll obtained after cutting is within a preset range.

This embodiment provides a non-transient computer-readable storage medium, where the non-transient computer-readable storage medium stores computer instructions, and the computer instructions cause the computer to perform the method provided in the foregoing method embodiments. The method includes for example: obtaining a length of an electrode plate to be cut; and when a slitting parameter meeting a preset condition exists, cutting the electrode plate to be cut based on the slitting parameter; where the preset condition includes: the slitting parameter is able to be used for cutting the electrode plate to be cut and a length of each electrode plate roll obtained after cutting is within a preset range.

In the embodiments provided in this application, it should be understood that the disclosed apparatus and method may be implemented in other manners. The described apparatus embodiments are merely illustrative. For example, the unit division is merely logical function division and other division manners may be used in actual implementation. For another example, a plurality of units or components may be combined or integrated into another system, or some features may be ignored or not be performed. In addition, the displayed or discussed mutual couplings, direct couplings or communication connections may be indirect couplings or communication connections through some communication interfaces, apparatuses or units, and may be in electrical, mechanical, or other forms.

In addition, the units described as separate parts may or may not be physically separate, and parts displayed as units may or may not be physical units, may be located in one position, or may be distributed on a plurality of network units. Some or all of the units may be selected depending on actual requirements to achieve the objectives of the solutions of the embodiments.

Furthermore, each functional module in each embodiment of the application may be integrated into an independent part, each module may also independently exist, and two or more than two modules may also be integrated into an independent part.

In this specification, relational terms such as "first" and "second" are only used to distinguish one entity or operation from another entity or operation, and do not necessarily require or imply that there is any such actual relationship or order between these entities or operations.

The foregoing descriptions are merely the embodiments of this application, but are not intended to limit the protection scope of this application. Persons skilled in the art understand that this application may have various modifications and variations. Any modifications, equivalent replacements, and improvements made without departing from the spirit and principle of this application shall fall within the protection scope of this application.

## Claims

1. An electrode plate slitting method, **characterized by** comprising:

   obtaining a length of an electrode plate to be cut; and when a slitting parameter meets a preset condition, cutting the electrode plate to be cut based on the slitting parameter; wherein the preset condition comprises: the slitting parameter is able to be used for cutting the electrode plate to be cut and a length of each electrode plate roll obtained after cutting is within a preset range.

2. The method according to claim 1, **characterized in that** determining that a slitting parameter meeting the preset condition exists comprises:

   starting with an initial value of the slitting parameter, determining whether the slitting parameter meets the preset condition; and if not, updating the slitting parameter until the obtained slitting parameter meets the preset condition, and determining that a slitting parameter meeting the preset condition exists.

3. The method according to claim 1, **characterized in that** determining that a slitting parameter meeting the preset condition exists comprises:

   starting with an initial value of the slitting parameter, determining whether the slitting parameter meets the preset condition; and if not, and a length of an electrode plate after cutting calculated based on the current slitting parameter is greater than a lower limit of the preset range, progressively increasing the slitting parameter until the obtained slitting parameter meets the preset condition, and determining that a slitting parameter meeting the preset condition exists.

4. The method according to claim 1, **characterized in that** the cutting the electrode plate to be cut based on the slitting parameter comprises:
if a plurality of slitting parameters meeting the preset condition exist, cutting the electrode plate to be cut based on a slitting parameter with a smallest value.

5. The method according to claim 1, **characterized in that** the cutting the electrode plate to be cut based on the slitting parameter comprises:

    if a plurality of slitting parameters meeting the preset condition exist, obtaining the number of cells of the electrode plate after cutting corresponding to each slitting parameter, wherein the number of cells is used for representing the number of cells that are able to be wound by using the electrode plate after cutting; and cutting the electrode plate to be cut based on a slitting parameter corresponding to the number of cells with a smallest decimal part value.

6. The method according to claim 1, **characterized in that** a difference in lengths of the electrode plate rolls obtained by cutting the electrode plate to be cut based on the slitting parameter is less than a preset threshold.

7. The method according to claim 1, **characterized in that** the cutting the electrode plate to be cut based on the slitting parameter comprises:

    monitoring an actual winding length;
    correcting the actual winding length by using a compensation parameter to obtain a corrected actual winding length; and
    if the corrected actual winding length is equal to the length of the electrode plate roll, performing a cut.

8. The method according to claim 7, **characterized in that** the method further comprises:

    obtaining a constant plate moving speed and a recorded constant speed winding length during a slitting process; and
    determining the compensation parameter based on the constant plate moving speed and the constant speed winding length.

9. The method according to any one of claims 1 to 8, **characterized in that** when a slitting parameter meeting the preset condition does not exist, cutting the electrode plate to be cut based on an upper limit of the preset range.

10. An electrode plate slitting apparatus, **characterized by** comprising:

    an obtaining module, configured to obtain a length of an electrode plate to be cut; and
    a cutting module, configured to, when a slitting parameter meeting a preset condition exists, cut the electrode plate to be cut based on the slitting parameter; wherein
    the preset condition comprises: the slitting parameter is able to be used for cutting the electrode plate to be cut and a length of each electrode plate roll obtained after cutting is within a preset range.

11. The apparatus according to claim 10, **characterized in that** determining that a slitting parameter meeting the preset condition exists comprises:

    starting with an initial value of the slitting parameter, determining whether the slitting parameter meets the preset condition; and
    if not, updating the slitting parameter until the obtained slitting parameter meets the preset condition, and determining that a slitting parameter meeting the preset condition exists.

12. The apparatus according to claim 10, **characterized in that** determining that a slitting parameter meeting the preset condition exists comprises:

    starting with an initial value of the slitting parameter, determining whether the slitting parameter meets the preset condition; and
    if not, and a length of an electrode plate after cutting calculated based on the current slitting parameter is greater than a lower limit of the preset range, progressively increasing the slitting parameter until the obtained slitting parameter meets the preset condition, and determining that a slitting parameter meeting the preset condition exists.

13. The apparatus according to claim 10, **characterized in that** the cutting module is specifically configured to:
if a plurality of slitting parameters meeting the preset condition exist, cut the electrode plate to be cut based on a slitting parameter with a smallest value.

14. The apparatus according to claim 10, **characterized in that** the cutting module is specifically configured to:

if a plurality of slitting parameters meeting the preset condition exist, obtain the number of cells of the electrode plate after cutting corresponding to each slitting parameter, wherein the number of cells is used for representing the number of cells that are able to be wound by using the electrode plate after cutting; and
cut the electrode plate to be cut based on a slitting parameter corresponding to the number of cells with a smallest decimal part value.

15. The apparatus according to claim 10, **characterized in that** a difference in lengths of the electrode plate rolls obtained by cutting the electrode plate to be cut based on the slitting parameter is less than a preset threshold.

16. The apparatus according to claim 10, **characterized in that** the cutting module is specifically configured to:

monitor an actual winding length;
correct the actual winding length by using a compensation parameter to obtain a corrected actual winding length; and
if the corrected actual winding length is equal to the length of the electrode plate roll, perform a cut.

17. The apparatus according to claim 16, **characterized in that** the apparatus further comprises:

a parameter determining module, configured to obtain a constant plate moving speed and a recorded constant speed winding length during a slitting process; and
determine the compensation parameter based on the constant plate moving speed and the constant speed winding length.

18. The apparatus according to any one of claims 10 to 17, **characterized in that** the cutting module is further configured to:
if a slitting parameter meeting the preset condition does not exist, cut the electrode plate to be cut based on an upper limit of the preset range.

19. An electronic device, **characterized by** comprising a processor, a memory, and a bus, wherein

the processor and the memory communicate with each other through the bus; and
the memory stores program instructions executable by the processor, and when invoking the program instructions, the processor is able to perform the method according to any one of claims 1 to 9.

20. A non-transient computer-readable storage medium, **characterized in that** the non-transient computer-readable storage medium stores computer instructions, and when a computer runs the computer instructions, the computer performs the method according to any one of claims 1 to 9.

```
┌─────────────────────────────────────────┐ ╭── 101
│  A terminal device obtains a length of an │╱
│         electrode plate to be cut         │
└─────────────────────────────────────────┘
                    │
                    ▼
┌─────────────────────────────────────────┐ ╭── 102
│  If a slitting parameter meeting a preset │╱
│  condition exists, the electronic device cuts the│
│  electrode plate to be cut based on the slitting│
│  parameter meeting the preset condition   │
└─────────────────────────────────────────┘
```

FIG. 1

```
┌─────────────────────────────────────────┐ ╭── 201
│    Set a slitting parameter to an initial value │╱
└─────────────────────────────────────────┘
                    │
                    ▼
              ╱────────────╲                  ╭── 202
             ╱   Determine   ╲      Yes     ┌──────────────────┐
  ◄────────◄  whether the slitting parameter meets ►────►│  A slitting parameter │
             ╲  a preset condition  ╱               │  meeting the preset  │
              ╲────────────╱                 │  condition exists    │
                    │ No                     └──────────────────┘
                    ▼                              ╭── 203
┌─────────────────────────────────────────┐╱
│  Update a value corresponding to the slitting │
│                parameter                  │
└─────────────────────────────────────────┘
```

FIG. 2

301

Set a slitting parameter to an initial value

302

Determine whether the slitting parameter meets a preset condition

Yes → A slitting parameter meeting the preset condition exists

No

303

Whether a length of an electrode plate after cutting is greater than a lower limit of a preset range

No → A slitting parameter meeting the preset condition does not exist

Yes

304

Increase a value corresponding to the slitting parameter

FIG. 3

```
┌─────────────────────────────────────────┐
│                                         │ ╱ 401
│      Obtain a number of produced rolls   │
│                                         │
└─────────────────────────────────────────┘
                    │
                    ▼
┌─────────────────────────────────────────┐
│  Obtain an EA value of an electrode plate │ ╱ 402
│               to be cut                  │
└─────────────────────────────────────────┘
                    │
                    ▼
              Whether
No ◁──── a running speed of a machine is        403
           greater than 30 m/min
                    │
                   Yes
                    ▼
              Whether
No ◁──── the electrode plate to be cut can ────▷ Yes    404
              be cut evenly
        │                                    │
        ▼                                    ▼
┌──────────────────────┐            ┌──────────────────────┐
│ A slitting batch      │ 405        │ A slitting batch      │ 406
│ meeting a preset      │            │ meeting a preset      │
│ condition exists      │            │ condition exists      │
└──────────────────────┘            └──────────────────────┘
```

FIG. 4

| Slitting function enabled |
| --- |

| | |
| --- | --- |
| Current production : | MEB |
| EA value of a large roll : | 3015.0 |
| Upper limit of EA of a small roll : | 550.0 |
| Lower limit of EA of a small roll : | 360.0 |
| EA value of roll change : | 502.5 |
| Number of produced rolls : | 6 out of 1 ▼ |
| Reset slitting | Length measurement correction |

FIG. 5

Obtaining module ~601 — Cutting module ~602

FIG. 6

FIG. 7

## INTERNATIONAL SEARCH REPORT

| International application No. |
|---|
| **PCT/CN2022/092255** |

**A.     CLASSIFICATION OF SUBJECT MATTER**

H01M 4/04(2006.01)i;  H01M 10/058(2010.01)i

According to International Patent Classification (IPC) or to both national classification and IPC

**B.     FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 锂电池, 极片, 分卷, 裁切, 分割, 切割, 长度, 最大, 最小, 范围, 计算, 平均, lithium w battery, pole w piece, roll, split, cut, length, maximum, minimum, range, calculation, average

**C.     DOCUMENTS CONSIDERED TO BE RELEVANT**

| Category* | Citation of document, with indication, where appropriate, of the relevant passages | Relevant to claim No. |
|---|---|---|
| Y | CN 105845882 A (DONGGUAN DIYABAO POWER SUPPLY CO., LTD.) 10 August 2016 (2016-08-10)<br>        description, paragraphs 0018-0040, and figures 1-3 | 1-20 |
| Y | CN 110842052 A (SHOUGANG JINGTANG UNITED IRON & STEEL CO., LTD.) 28 February 2020 (2020-02-28)<br>        description, paragraphs 0036-0100, and figures 1-2 | 1-20 |
| A | CN 101847713 A (HONGBRO PRECISION MACHINERY MANUFACTURING FACTORY) 29 September 2010 (2010-09-29)<br>        entire document | 1-20 |
| A | CN 108232324 A (SHENZHEN CHENGJIE INTELLIGENT EQUIPMENT STOCK CO., LTD.) 29 June 2018 (2018-06-29)<br>        entire document | 1-20 |
| A | WO 2013010473 A1 (GEESUN AUTOMATION TECHNOLOGY CO., LTD. et al.) 24 January 2013 (2013-01-24)<br>        entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 November 2022** | **25 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/092255**

| Patent document<br>cited in search report | | | Publication date<br>(day/month/year) | Patent family member(s) | | | Publication date<br>(day/month/year) |
|---|---|---|---|---|---|---|---|
| CN | 105845882 | A | 10 August 2016 | None | | | |
| CN | 110842052 | A | 28 February 2020 | None | | | |
| CN | 101847713 | A | 29 September 2010 | None | | | |
| CN | 108232324 | A | 29 June 2018 | None | | | |
| WO | 2013010473 | A1 | 24 January 2013 | CN | 102881946 | A | 16 January 2013 |

Form PCT/ISA/210 (patent family annex) (January 2015)